# EUROPEAN PATENT APPLICATION

(11) **EP 4 610 537 A1**
(43) Date of publication of application: **03.09.2025**
(21) Application number: 23882375.1
(22) Date of filing: 05.10.2023
(51) Int. Cl.: F16L 59/065, B32B 7/027, B32B 27/36

(54) **OUTER PACKAGING MATERIAL FOR VACUUM THERMAL INSULATION MATERIALS, VACUUM THERMAL INSULATION MATERIAL, AND ARTICLE WITH VACUUM THERMAL INSULATION MATERIAL**

(30) Priority: 26.10.2022 JP 2022171708
(71) Applicant: Dai Nippon Printing Co., Ltd., Tokyo 162-8001 (JP)
(72) Inventor: MUNEDA, Taku, Tokyo 162-8001 (JP); MIZOSHIRI, Makoto, Tokyo 162-8001 (JP)
(74) Representative: Beck Greener LLP
(86) International application number: PCT/JP2023/036394
(87) International publication number: WO 2024/090166

(57) **Abstract**

The present disclosure provides an outer packing material for vacuum insulation material comprising a film including a substrate including polyethylene terephthalate, and an inorganic layer including inorganic material that is disposed on at least one surface of the substrate, wherein a lamellar period of the polyethylene terephthalate substrate is 13.0 nm or more and 16.0 nm or less.

## Description

### Technical Field

The presentdisclosure relates to an outer packing material for vacuum insulation material capable of forming a vacuum insulationmaterial, a vacuum insulation material, and an article provided with a vacuum insulation material.

### Background Art

In recent years, vacuum insulation materials have been used for the purpose of energy conservation of articles. Avacuum insulation material is a member in which a core material is arranged inside the bag body of an outer packing material, and inside the bag body is kept in a vacuum state of which pressure is lower than the atmospheric pressure; thus, heat convection inside is suppressed to exhibit an excellent heat insulation performance. Incidentally, the outer packing material used for the vacuum insulation material is referred to as an outer packing material for vacuum insulation material, or simply the outer packing material while explained.

When a vacuum insulation material is exposed to high temperature, there is a problem that the insulation performance decreases over time, even if the vacuum insulation material has a low initial thermal conductivity. To such the problem, for example, Patent Document 1 discloses an outer packing material for vacuum insulation material, wherein the dimensional change ratio of the outer packing material for vacuum insulation material, when the temperature of the atmosphere is changed from 20°C to 145°C, after maintaining the temperature of the atmosphere at 145°C for one hour, and changed the temperature of the atmosphere from 145°C to 20°C, based on the dimension of the outer packing material for vacuum insulation material when the temperature of the atmosphere is 20°C, is 1% or less. As described above, Patent Document 1 discloses that, since the dimensional change ratio of the outer packing material for vacuum insulation material is in the specific range, the gas barrier performance of the outer packing material can be maintained high even at high temperature so that it is able to form a vacuum insulation material that is able to maintain a thermal insulating property for a long term even at high temperature. Meanwhile, the Patent Document 1 does not clarify disclose guidelines for materials with low dimensional change ratio.

In order to make the dimensional change ratio of the outer packing material for vacuum insulation material at high temperature environment low, so as to form a vacuum insulation material that is able to maintain a thermal insulating property for a long term even at high temperature, Patent Document 2 discloses an outer packing material for vacuum insulation material comprising at least a thermally weldable film and a gas barrier film, wherein the thermally weldable film includes an amorphous copolymerization polyester resin.

### Citation List

### Patent Documents

Patent Document 1: Japanese Patent Application Laid-Open (JP-A) No. 2017-180822
Patent Document 2: JP-A No. 2017-210986

### Summary

### Technical Problem

The present disclosure has been made in view of the above circumstances, and a main object of the present disclosure is to provide an outer packing material for vacuum insulation material capable of forming a vacuum insulation material that is able to maintain a thermal insulating property for a long term even at high temperature.

### Solution to Problem

The present disclosure provides an outer packing material for vacuum insulation material comprising a film including a substrate including polyethylene terephthalate, and an inorganic layer including inorganic material that is disposed on at least one surface of the substrate, wherein a lamellar period of the substrate is 13.0 nm or more and 16.0 nm or less.

Also, the present disclosure provides a vacuum insulation material comprising a core material, and an outer packing material enclosing the core material; wherein the outer packing material is the outer packing material for vacuum insulation material described above.

Also, the present disclosure provides an article provided with vacuum insulation material comprising an article including a thermal insulation region, and a vacuum insulation material, wherein the vacuum insulation material includes a core material, and an outer packing material enclosing the core material; and the outer packing material is the outer packing material for vacuum insulation material described above.

### Advantageous Effects

According to the present disclosure, an outer packing material for vacuum insulation material capable of forming a vacuum insulation material that is able to maintain a thermal insulating property for a long term even at high temperature, may be provided.

### Brief Description of Drawings

[FIG. 1] is a schematic cross-sectional view illustrating an example of an outer packing material for vacuum insulation material in the present disclosure.
[FIG. 2] is a schematic view of the stacked structure of the crystal portion and amorphous portion of a crystalline polymer.
[FIG. 3] is a graph showing a relationship between the lamellar period and the dimensional change of a PET substrate.
[FIGS. 4] are schematic cross-sectional views illustrating other examples of the outer packing material for vacuum insulation material in the present disclosure.
[FIGS. 5] are schematic cross-sectional views illustrating other examples of an outer packing material for vacuum insulation material in the present disclosure.
[FIGS. 6] are a schematic perspective view and a cross-sectional view illustrating an example of a vacuum insulation material in the present disclosure.

### Description of Embodiments

The present disclosure includes an outer packing material for vacuum insulation material, a vacuum insulation material, and an article provided with a vacuum insulation material as its embodiments. Embodiments of the present disclosure are hereinafter explained with reference to, for example, drawings. However, the present disclosure is enforceable in a variety of different forms, and thus should not be taken as is limited to the contents described in the embodiments exemplified as below. Also, the drawings may show the features of the invention such as width, thickness, and shape of each member schematically comparing to the actual form in order to explain the invention more clearly in some cases; however, it is merely an example, and thus does not limit the interpretation of the present disclosure. Also, in the present descriptions and each drawing, for the factor same as that described in the figure already explained, the same reference sign is indicated and the detailed explanation thereof may be omitted. Also, for the convenience of explanation, explanation may be made using the terms upward or downward in some cases, but the direction of up and down may be reversed.

Also, in the present descriptions, when some structure in some member or some region and the like is described to be "on (or below) " the other structure in other member or the other region and the like, unless otherwise stated, it is not just the case of being directly on (or directly below) the other structure, but the case of being upward (or downward) the other structure is also included; it means it also includes the case an additional structural element is included in between the upward (or downward) the other structure.

The outer packing material is required to have various functions such as gas barrier performance to prevent gas, such as water vapor and oxygen from outside, from permeating inside the insulation material, and thermal adhesion performance to cover and seal the core material. Therefore, the outer packing material is formed as a stacked body including a plurality of films having each of these functional properties. A general embodiment of the outer packing material is one formed by stacking a thermally weldable film, a gas barrier film, and a protective film. Also, as a gas barrier film used for the outer packing material, a film including a resin substrate, and a gas barrier layer disposed on at least one surface of the resin substrate is used in some cases.

The inventors of the present application have found out that, when the outer packing material is exposed to high temperature, the expansion and contraction of the resin substrate of the gas barrier film, among the plurality layers constituting the outer packing material, affects the deterioration of the gas barrier layer and directly affects the gas barrier performance of the outer packing material. For example, when the dimension of the resin substrate decreases, compressive stress is applied to the gas barrier layer as well. Also, when the dimension of the resin substrate increases, tensile stress is applied to the gas barrier layer. Therefore, a crack is generated in the gas barrier layer and the gas barrier performance of the gas barrier film is deteriorated. It is presumed that such expansion and contraction of the resin substrate, due to heat, causes the reduction of degree of vacuum inside the vacuum insulation material.

The inventors of the present application have studies about the materials of the resin substrate that can suppress dimensional change due to temperature fluctuation. As a result, it was found that the dimensional change due to temperature fluctuation of a substrate including polyethylene terephthalate with a specific lamellar period (hereinafter, may be referred to as a PET substrate) is small. Specifically, it was found out that the dimensional change ratio before and after being maintained at high temperature, and further, the dimensional change ratio in each of the temperature increasing process, constant temperature process, and temperature decreasing process described later, are small. Further, it was found out that, by using the PET substrate having a specific lamellar period as the resin substrate for the gas barrier film, a high gas barrier performance can be maintained even at high temperature so that it is able to obtain an outer packing material for vacuum insulation material capable of forming a vacuum insulation material that is able to maintain a thermal insulating property for a long term.

Hereinafter, an outer packing material for vacuum insulationmaterial, a vacuum insulation material, and an article provided with the vacuum insulation material in the present disclosure are respectively explained.

### A. Outer packing material for vacuum insulation material

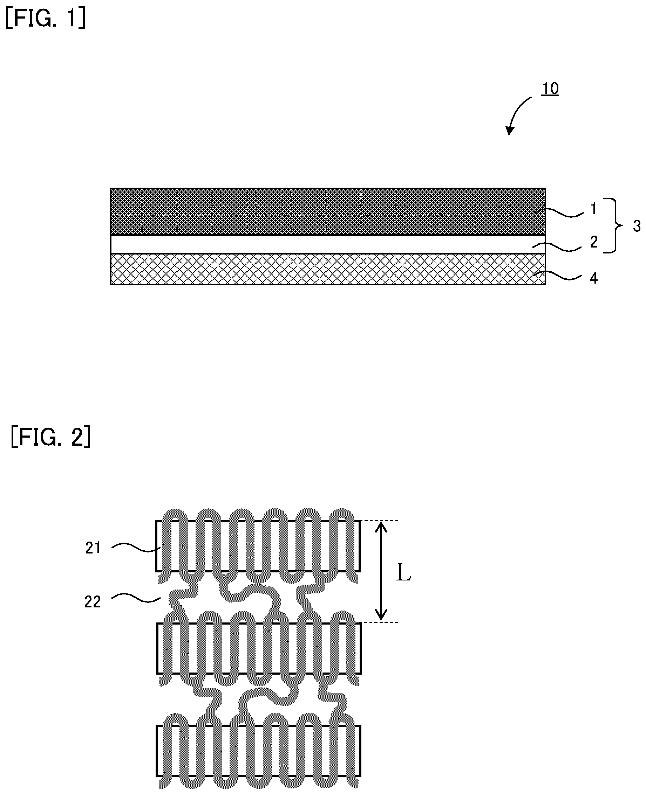

FIG. 1 is a schematic cross-sectional view illustrating an example of the outer packing material for vacuum insulation material in the present disclosure. The outer packing material for vacuum insulation material 10 in the present disclosure comprises a film 3 including a PET substrate **1,** and an inorganic layer 2 including inorganic material that is disposed on at least one surface of the PET substrate 1. In the present disclosure, the lamellar period of the PET substrate (the lamellar period of polyethylene terephthalate constituting the PET substrate, hereinafter the phrase is used as the same meaning) is 13.0 nm or more and 16.0 nm or less.

According to the present disclosure, by using a PET substrate constituted from polyethylene terephthalate (hereinafter, referred to as PET) with a lamellar period in a predetermined range, as the resin substrate of the film (hereinafter, may be referred to as gas barrier film), the dimensional change of the PET substrate, with respect to the temperature fluctuation, is suppressed, and cracks in the inorganic layer can be prevented when exposed to high temperature. Therefore, a high gas barrier performance can be maintained even at high temperature so that is able to obtain an outer packing material for vacuum insulation material capable of forming a vacuum insulation material that is able to maintain a thermal insulating property for a long term.

Each constitution and property of the outer packing material for vacuum insulationmaterial in the present disclosure is hereinafter described in detail.

### 1. Gas barrier film

The gas barrier film in the present disclosure includes a PET substrate, and an inorganic layer including inorganic material that is disposed on at least one surface of the PET substrate.

### 1-1. PET substrate

The outer packing material for vacuum insulation material in the present disclosure includes a PET substrate as a resin substrate configured to support the inorganic layer described below. The PET substrate mainly includes PET. Inthis context, "mainly includes" means the component of the highest content ratio among the substrate constituting components.

### (1) Lamellar period

The lamellar period of the PET substrate in the present disclosure is 13.0 nm or more and 16.0 nm or less, preferably 13.0 nm or more and 15.0 nm or less, and more preferably 14.0 nm or more and 15.0 nm or less.

The lamellar period of the PET substrate in the present disclosure can be determined from the X-ray profile obtained by small-angle X-ray measurement (SAXS). As shown in FIG. 2, crystalline polymers generally have a regularstacking structure (periodic structure) including repetition of crystalline portion 21 and amorphous portion 22. Here, the size of the repeating unit including the crystalline portion 21 and amorphous portion 22 is called the lamellar period L (long period length) . This lamellar period L can be obtained from the position of the scattering peak derived from the long-period structure measured by small-angle X-ray scattering method.

### <Measurement of crystal structure>

### (Preparation of sample)

A PET substrate is cut into a rectangle of 1 cm (MD direction) × 1 cm (TD direction).

### (Measurement device)

NANO-inXider from Xenocs Inc.

### (Measurement conditions)

- Wavelength: Cu Kα1 ray (1.54 Å)
- X-ray generator output: 50 kV-0.6 mA
- Observation Mode: transparent
- Integration time: 10 minutes
- Detector: PILATUS 200K
- Sample size: 1 cm × 1 cm rectangular
- Samples were disposed so that the MD direction is the meridian direction of the detector

Cu Kα1 ray is irradiated on the sample by the measurement device, and a two-dimensional scattering pattern is obtained at the detector. One-dimensional scattering spectrum is extracted, from the obtained 2-dimensional scattering pattern, by defining the angle between the meridian direction and the straight line connecting the local maximal point of the scattering peak strength in the region of scattering spectrum q = 0.1/nm⁻¹ or more and the beam center as the principal azimuth direction, and integrating the spectra in the region within ±5 degrees of the azimuth from the principal azimuth, in the azimuth direction. When the peak position of the one-dimensional scattering spectrum is regarded as q_{L}, the lamellar period (long period length) L of the repeating structure of the lamellar, in the principal azimuth direction, is determined as L = 2π/q_{L}.

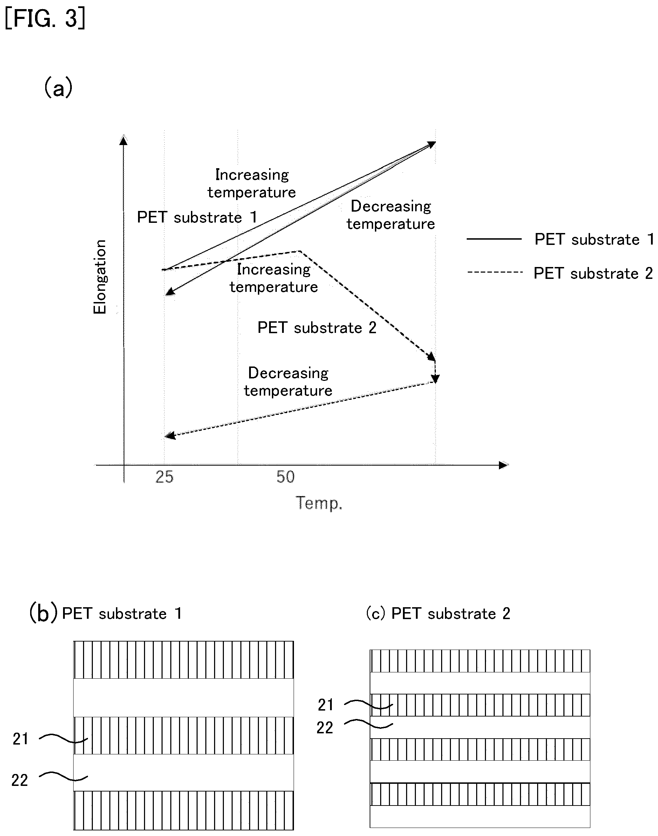

Here, FIG. 3(a) is a graph showing the dimensional changes (expansion and contraction) of the PET substrates when exposed to high temperature, for a PET substrate 1 with a long lamellar period and a PET substrate 2 with a short lamellar period. Also, FIG. 3(b) is a schematic view of the lamellar structure of PET substrate 1, and FIG. 3(c) is a schematic view of the lamellar structure of PET substrate 2. As shown in FIG. 3(a), the dimensional change in the PET substrate 1 is large during the temperature increasing process and temperature decreasing process. As described later, the reason therefor is assumed that, in comparison between films of the same degree of crystallinity, the long lamellar period means that the region wherein the flow is large, when exposed to high temperature of the glass transition temperature or more and the melting point or less, and this results in a large coefficient of thermal expansion. Incidentally, the dimensional change ratio of the PET substrate 1 before and after being maintained at high temperature, that is, the PET substrate 1 after the temperature increasing process, constant temperature process, and temperature decreasing process, is relatively small.

As shown in FIG. 3(a), the dimensional change of the PET substrate 2 is small during the temperature increasing process and temperature decreasing process. Also, the dimensional change, when going through the temperature increasing process, constant temperature process, and temperature decreasing process (before and after being maintained at high temperature), is large. Specifically, although the dimension increases as the temperature rises, it subsequently shrinks during the temperature increase, and also shrinks during the constant temperature process. Further, it shrinks thereafter in the temperature decreasing process. In comparison between films of the similar degree of crystallinity, the short lamellar period means that the region wherein the flow is large, when exposed to high temperature of the glass transition temperature or more and the melting point or less, is small. This is because, since the amorphous portion that can flow largely at the temperature of the glass transition temperature or more and the melting point or less is limited to the amorphous portion excluding the region particularly adjacent to the crystalline portion, among the amorphous portion, when the lamellar period is shorter, the region of the amorphous portion adjacent to the crystalline portion increases, and the region that flows largely at high temperature of the glass transition temperature or more and the melting point or less decreases. The reason why the dimensional change of the PET substrate 2 in the temperature increasing process and temperature decreasing process is small is assumed that, since the region that can flow largely is small, when exposed to high temperatures of the glass transition temperature or more and the melting point or less, the heat expansion coefficient is low.

Also, reason why the dimensional change of the PET substrate 2 which has passed through the temperature increasing process, constant temperature process, and temperature decreasing process (before and after being maintained at high temperature) is large is assumed that, since the region that can flow largely is small at temperature band of the glass transition temperature or more in the production process of the PET substrate 2, the distortion of the structure is not dissolved and remains, and the distortion still remains at low temperature band wherein the entire region loses the flowability, such as at room temperature.

Incidentally, when the lamellar period is long, such as PET substrate 1, since it originally has a structure with little distortion, it shows restoration properties such as elongation in the temperature increasing process and contraction in the temperature decreasing process, so that the dimensional change ratio before and after being maintained at high temperature is relatively small.

Meanwhile, in the present disclosure, by the lamellar period of the PET substrate being within the above range, the dimensional change due to temperature fluctuation is suppressed. Specifically, the dimensional change ratio of the PET substrate before and after being maintained at high temperature, and the dimensional change ratio in each of the temperature increasing process, constant temperature process, and temperature decreasing process can be suppressed. Therefore, by using such specific PET substrate as the resin substrate for the gas barrier film, a high gas barrier performance can be maintained even at high temperature so that is able to obtain an outer packing material for vacuum insulation material capable of forming a vacuum insulation material that is able to maintain a thermal insulating property for a long term.

The PET substrate in the present disclosure may be unstretched, uniaxially or biaxially stretched, and preferably biaxially stretched. The stretched direction of the biaxially stretched PET substrate is not particularly limited. For example, it may be stretched in the MD direction and TD direction.

Examples of the method for making the lamellar period of the PET substrate in the range described above may include a method wherein the annealing temperature is adjusted, and a method wherein the cooling rate, when crystallizing from the melted state, is adjusted. For example, the lamellar period tends to be longer when the annealing temperature is increased, and the lamellar period tends to be shorter when the annealing temperature is decreased. Also, the lamellar period tends to be longer when the cooling rate, when crystallizing from the melted state, is decreased, and the lamellar period tends to be shorter when the cooling rate, when crystallizing from the melted state, is increased.

Also, commercially available PET with a lamellar period within the above range may be obtained and used as the PET substrate . Examples of the PET with a lamellar period within the range described above may include PT10 (from Sanfame Co., Ltd., China). Meanwhile, many commercially available PETs have a smaller lamellar period than the above range. For example, CB981 (from Kolon Industries) has a lamellar period of 12.3 nm.

The crystallinity of the PET substrate in the present disclosure is not particularly limited, and is, for example, 20% or more and 40% or less, and may be 25% or more and 35% or less.

### (2) Dimensional change ratio

The dimensional change of the PET substrate in the present disclosure, with respect to temperature fluctuation, is small. Specifically, based on the dimension of the PET substrate when the temperature of the atmosphere is 20°C, the dimension change ratio of the PET substrate when the temperature of the atmosphere is changed from 20°C to 145°C, after maintaining the temperature of the atmosphere at 145°C for one hour, and changed the temperature of the atmosphere from 145°C to 20°C (hereinafter, may be referred to as "dimension change ratio of the PET substrate before and after being maintained at high temperature"), is, for example, 1% or less, and preferably 0.5% or less.

Here, Patent Document 1 discloses that, by making the dimensional change ratio of the outer packing material, before and after being maintained at high temperature, 1% or less, and preferably 0.5% or less, a crack in the gas barrier layer may be suppressed even when the outer packing material is exposed to heat, since the stress applied to the gas barrier layer can be suppressed. Therefore, when the dimensional change ratio of the PET substrate, before and after being maintained at high temperature, is in the range described above, a crack in the inorganic layer (gas barrier layer) may be suppressed even when the outer packing material is exposed to heat, since the stress applied to the inorganic layer (gas barrier layer) can be suppressed, so as to be able to provide an outer packing material capable of forming a vacuum insulation material that is able to maintain a thermal insulating property for a long term even at high temperature. Among the gas barrier performances, water vapor barrier performance is mainly exhibited by the gas barrier layer constituting the gas barrier film. However, the physical properties tend to deteriorate due to the deterioration of the inorganic layer (gas barrier layer) caused by the dimensional change of the PET substrate. In the present disclosure, since the dimensional change ratio of the PET substrate before and after being maintained at high temperature can be in the above range, and the deterioration of the inorganic layer (gas barrier layer) and the deterioration of the water vapor permeability before and after being maintained at high temperature can be suppressed, high gas barrier performance, particularly high water vapor barrier performance can be exhibited regardless of temperature change.

Also, in the present disclosure, the dimensional change ratio of the PET substrate, when the temperature of the atmosphere is changed from 20°C to 145°C (hereinafter, may be referred to as the "temperature increasing process") is, for example, 1% or less, more preferably 0.5% or less, and particularly preferably 0.3% or less. Also, the dimensional change ratio of the PET substrate, when the temperature of the atmosphere is maintained at 145°C for one hour (hereinafter, maybe referred to as the "constant temperature process") is, for example, 0.5% or less, and more preferably 0.3% or less. Further, the dimensional change ratio of the PET substrate, when the temperature of the atmosphere is changed from 145°C to 20°C (hereinafter, may be referred to as the "temperature decreasing process") is preferably 0.5% or less, andparticularlypreferably 0.4% or less.

Patent Document 1 discloses that the dimensional change ratio of the outer packing material in the temperature increasing process is preferably 1% or less, the dimensional change ratio of the outer packing material in the constant temperature process is preferably 0.5% or less, and further, the dimensional change ratio of the outer packing material in the temperature decreasing process is preferably 1% or less. Patent Document 1 discloses that, when the dimensional change ratio in each process is in the range described above, a crack in the gas barrier layer may be suppressed even when the outer packing material is exposed to heat, since the stress applied to the gas barrier layer can be suppressed. Also in the present disclosure, when the dimensional change ratio of the PET substrate in each of the process described above is in the range described above, a crack in the inorganic layer (gas barrier layer) may be suppressed even when the outer packing material is exposed to heat, since the stress applied to the inorganic layer (gas barrier layer) can be suppressed, so as to be able to provide an outer packing material capable of forming a vacuum insulation material that is able to maintain a thermal insulating property for a long term even at high temperature.

Incidentally, the dimensional change ratio of the PET substrate, when the temperature of the atmosphere is changed from 20°C to 145°C may be referred to as "dimensional change ratio of the PET substrate in the temperature increasing process". Also, the dimensional change ratio of the PET substrate, when the temperature of the atmosphere is maintained at 145°C for one hour may be referred to as "dimensional change ratio of the PET substrate in the constant temperature process". Further, the dimensional change ratio of the PET substrate, when the temperature of the atmosphere is changed from 145°C to 20°C may be referred to as "dimensional change ratio of the PET substrate in the temperature decreasing process".

The dimensional change ratio of the PET substrate in each of the temperature increasing process, constant temperature process, and temperature decreasing process is obtained by measuring a measurement sample, with a thermomechanical analyzer (TMA), for the average value of the dimensional change ratio with respect to the initial value (dimension at 20°C before the temperature is increased) of the longitudinal direction of the PET substrate, that is the continuous film forming direction (MD direction) ; and the dimensional change ratio with respect to the initial value (dimension at 20°C before the temperature is increased) of the width direction of the PET substrate, under the following conditions, in each process of the temperature increasing process from 20°C to 145°C, followed by the constant temperature process at 145°C for one hour, and followed by the temperature increasing process from 145°C to 20°C. The dimensional change ratio of the PET substrate before and after being maintained at high temperature is obtained by measuring a measurement sample after going through the temperature increasing process, constant temperature process, and temperature decreasing process, with a thermomechanical analyzer, for the average value of the dimensional change ratio with respect to the initial value (dimension at 20°C before the temperature is increased) of the longitudinal direction of the PET substrate, that is the continuous film forming direction (MD direction); and the dimensional change ratio with respect to the initial value (dimension at 20°C before the temperature is increased) of the width direction of the PET substrate, under the following conditions.

Thermomechanical analyzer: TMA/SS6100 from Hitachi High-Tech Science Corporation
Measurement mode: tensile mode, load of 15 mN
Measurement sample: rectangular shape of 13 mm (longitudinal direction) × 5 mm (transverse direction)
Distance between chucks: 10 mm
Increasing onset temperature: 20°C
Increase ending temperature: 145°C (holding time at 145°C: 1 hour)
Decreasing ending temperature: 20°C
Temperature increasing and decreasing rate: 10°C/min
Measuring atmosphere: under nitrogen purged
Measurement frequency: at 0.16 minute intervals

Incidentally, the dimensional change ratio before and after being maintained at high temperature obtained by the method described above is defined by the following Formula (3). However, the dimension of the PET substrate at 20°C before the temperature is increased is regarded as L₀ in the Formula (3), the dimension of the PET substrate after going through the temperature increasing process, constant temperature process, and temperature decreasing process is regarded as L₁ in Formula (3) . Dimensional change ratio (%) before and after being maintained at high temperature = |L0 - L1 |/L0 × 100

Also, the dimensional change ratio during each of the temperature increasing process, constant temperature process, and temperature decreasing process by the method described above is defined by the following Formula (4). However, the dimension of the PET substrate at 20°C before the temperature is increased is regarded as L₀ in the Formula (4), the minimum dimension of the outer packing material obtained in the measurement process is regarded as Lₘᵢₙ in Formula (4), and the maximum dimension of the PET substrate obtained in the process is regarded as Lₘₐₓ in Formula (4). Dimension change ratio (%) in each process = (Lmax - Lmin)/L0 × 100

### (3) Others

The PET substrate may or may not have a transparency. The PET substrate may include, for example various plastic compounding agents, and additives. Examples of the additive may include a lubricant, a crosslinking agent, an antioxidant, an ultraviolet ray absorber, a light stabilizer, a filler, a reinforcing agent, an anti-static agent, a pigment, and a resin for modification.

The PET substrate may be subjected to a surface treatment. The reason therefor is to improve the close adhesiveness to the inorganic layer. Examples of the surface treatment may include plasma treatment, oxidation treatment disclosed in Japanese Patent Application Laid-Open (JP-A) No. 2014-180837, indenting treatment (roughening treatment), and easy adhesion coating treatment.

The thickness of the PET substrate is not particularly limited, and is, for example, 6 µm or more and 200 µm or less, preferably 9 µm or more and 100 µm or less, and more preferably 10 µm or more and 50 µm or less.

### 1-2. Inorganic layer

The inorganic layer in the present disclosure is a thin film including an inorganic material, and is disposed on at least one surface of the PET substrate. The inorganic layer functions as a gas barrier layer, exhibiting gas barrier properties, by being formed on one surface of the PET substrate.

The inorganic layer is not particularly limited as long as it includes an inorganic material, and it is capable of exhibiting desired gas barrier properties, and for example, metal layers including metal, and layers including inorganic compounds as a main component can be used. The inorganic layer may or may not have a transparency.

Examples of the metal constituting the metal layer may include metal vapor deposition films including metals such as aluminum, stainless steel, titanium, nickel, iron, and copper, or alloys of these metals.

Also, the inorganic compound of the layer including inorganic compounds as a main component may be any material exhibiting desired gas barrier properties, and examples thereof may include one or two or more inorganic compounds selected from inorganic oxides, inorganic oxynitrides, inorganic nitrides, inorganic oxycarbides, inorganic oxycarbonitrides, and silicon zinc oxides. Specific examples may include inorganic compound including one type or two types or more atoms selected from silicon, aluminum, magnesium, calcium, potassium, tin, sodium, titanium, boron, yttrium, zirconium, cerium, and zinc. More specifically, examples may include silicon oxides, aluminum oxides, magnesium oxides, titanium oxides, tin oxides, silicon zinc alloy oxides, indium alloy oxides, silicon nitrides, aluminum nitrides, titanium nitrides, and silicon oxynitrides. Particularly, aluminum oxides (alumina) and silicon oxides (silica) are preferable. One type of the inorganic compound may be used alone, and the materials described above may be used in a combination at any ratio.

In the present disclosure, the inorganic material constituting the inorganic layer is preferably aluminum, aluminum oxide, or silicon oxide. The inorganic layer may be a vapor deposition film formed by a vapor deposition method, and may be a coating film formed by applying methods such as a coating method. In particular, a vapor deposition film is preferable in view of high close adhesiveness to the PET substrate and exhibiting high gas barrier properties. In a case of the vapor deposition film, the layer may be formed by a single time vapor deposition, and may be formed by a multiple times of vapor depositions. That is, one inorganic layer may be a single film formed by one time vapor deposition, and may have a stacked structure formed by a multiple times of vapor depositions.

The thickness of the inorganic layer is not particularly limited, and it is preferably in a range of 10 nm or more and 300 nm or less. By setting the thickness of the inorganic layer within the above range, the barrier properties can be maintained and the flexibility is sufficiently maintained, and the barrier fracture is less likely to occur.

### 1-3. Other layer structure

The film in the present disclosure may include an overcoating layer so as to cover the surface of the inorganic layer that is opposite to the PET substrate. By including the overcoating layer, the gas barrier performance of the gas barrier film may be improved. Such an overcoating layer is not particularly limited, and those commonly used as an overcoating agent can be used. For example, as the main component of the overcoating layer, mixed compounds including an organic portion and an inorganic portion can be used. Specifically, since the overcoating layer described in Japanese Patent Application Laid-Open (JP-A) No. 2017-180822 can be employed, explanation herein is omitted.

### 1-4. Others

As for the gas barrier performance of the gas barrier film alone (one) in the present disclosure, the oxygen permeability is preferably 0.1 cc/ (m²·day·atm) or less, and more preferably 0.05 cc/(m²·day·atm) or less. Also, the water vapor permeability is preferably 0.1 g/(m²·day) or less, and more preferably 0.05 g/ (m²·day) or less. When the oxygen and water vapor permeabilities of the gas barrier film are within the range described above, it makes moisture and gas penetrated from the outside difficult to penetrate into the core material inside of the vacuum insulation material. Also, for example, by using a plurality of the gas films with such gas barrier performance, the gas barrier performance as an outer packing material can be further improved. Incidentally, the oxygen permeability and water vapor permeability can be measured by the methods similar to those described in the section "3. Properties of outer packing material for vacuum insulation material" below.

### 2. Layer structure of outer packing material for vacuum insulation material

### 2-1. Gas barrier film

The outer packing material for vacuum insulation material in the present disclosure has only to include at least one gas barrier film including the specified PET substrate and inorganic layer described above, and it preferably includes two or more of them. The reason therefor is to improve the gas barrier performance of the outer packing material.

When the outer packing material includes two or more gas barrier films including the specified PET substrate and inorganic layer described above, the configuration of each gas barrier film such as the material qualities of the inorganic layer of the gas barrier film, and the presence or non-presence of the overcoating layer may or may not be the same. Also, a plurality of films having the same functions or properties may be used, and the functions or the properties of each film can be exhibited by using films having different functions or properties disposed according to their functions or properties.

Also, the outer packing material for vacuum insulation material in the present disclosure may include one or more other films having gas barrier properties other than the gas barrier film including the specified PET substrate described above.

Examples of other films having gas barrier properties may include ones including a resin substrate and an inorganic layer disposed on at least one surface of the resin substrate. Examples of the resin substrate may include resin substrates other than the specific PET substrate described above. The resin used for the resin substrate is not particularly limited, and for example, variety of resins such as polyolefin resins such as polyethylene and polypropylene; polyester resins such as polyethylene terephthalate (PET), polyethylene naphthalate (PEN), and polybutylene terephthalate (PBT); cyclic polyolefin resins; polystyrene resins; acrylonitrile-styrene copolymers (AS resin); acrylonitrile-butadiene-styrene copolymers (ABS resin); poly (meth) acrylic resins; polycarbonate resins; ethylene-vinyl ester copolymers and saponifiables thereof; polyamide resins such as a variety of nylon; polyimide resins; polyurethane resins; acetal resins; and cellulose resins, may be used.

The thickness of the resin substrate is not particularly limited, and is, for example, 6 µm or more and 200 µm or less, and more preferably 9 µm or more and 100 µm or less. Also, the resin substrate may be a single-layer, and may be a multilayer obtained by stacking a plurality of the resin layers. Each resin layer in the multilayer may be constituted from different resins, and may be constituted from the same resin.

Examples of the inorganic layer in other films may include those similar to the inorganic layer in gas barrier films including the specific PET substrate described above.

### 2-2. Thermally weldable film

In the outer packing material for vacuum insulation material in the present disclosure, a thermally weldable film is usually disposed on one main surface side. Such thermally weldable film is a film that can be welded by heating thereof. The thermally weldable film is a member constituting one surface, in the thickness direction, of the outer packing material for vacuum insulation material; contacts with a core material when a vacuum insulation material is produced using the outer packing material for vacuum insulation material in the present disclosure; and it is a member configured to bond the edge portions of the outer packing materials for vacuum insulation material facing to each other when the core material is enclosed therein.

The material of the thermally weldable film is preferably thermoplastic resins since it can be melted by heat and fusion bonded, and examples may include polyolefin based resins such as polyethylene such as straight chain-short chain branched polyethylene (LLDPE), and high density polyethylene (HDPE), and cast polypropylene (CPP); polyester based resins such as polyethylene terephthalate (PET), polyethylene naphthalate (PEN), and polybutylene terephthalate (PBT); polyvinyl acetate based resins; polyvinyl chloride based resins: poly(meth) acrylic based resins; urethane resins; polyvinyl alcohol based resins; ethylene-vinyl alcohol copolymer (EVOH) resins; polyphenylene sulfide (PPS) resins; and tetrafluoroethylene (C₂F₄)•ethylene (C₂H₄) copolymer (ETFE) resins.

In the present disclosure, the resins listed above may be selected as appropriate according to the setting of the melting point of the thermally weldable film. For example, straight chain-short chain branched polyethylene (LLDPE) is highly versatile and can be thermally welded at relatively low temperature. However, since LLDPE has a low melting point, the dimension of the thermally weldable film tends to change due to the temperature change. However, since the outer packing material in the present disclosure includes the film including the specific PET substrate described above, the dimensional change as the outer packing material as a whole, when LLDPE is used as the thermally weldable film, is suppressed so that the decrease of the gas barrier performance of the outer packing material can be suppressed.

The melting point of the thermally weldable film is preferably 50°C or more, further preferably 80°C or more, more preferably 100°C or more, and particularly preferably 145°C or more. Also, the melting point is preferably 300°C or less, further preferably 290°C or less, and more preferably 280°C or less. Also, when the melting point of the thermally weldable film is 145°C or more, heat deterioration and dimensional change of the thermally weldable film itself can be suppressed even when the outer packing material of the present disclosure is exposed to high temperature environment for a long term so that the dimensional change of the outer packing material as a whole, due to the dimensional change of the thermally weldable film, can be suppressed. Further, when the melting point of the thermally weldable film is higher, the peeling of the sealing surface due to exposure to the surrounding environmental temperature, when the outer packing material in the present embodiment is used in the production of the vacuum insulation material, can be more suppressed. For the reason described above, a vacuum insulation material resistant to use in high temperature environment can be obtained. The melting point of the thermally weldable film set from this point of view may be in a range of 145°C or more and 300°C or less, may be 145°or more and 290°C, and may be 145°C or more and 280°C or less.

The melting point of the thermally weldable film in the outer packing material may be measured by the following method. Firstly, the thermally weldable film is peeled off from the outer packing material to obtain approximately 10 mg of a measurement sample. This measurement sample is put in an aluminum cell and the temperature thereof is raised from 20°C to 300°C at the temperature increasing speed of 10°C/minute, in a nitrogen atmosphere using Differential Scanning Calorimeter (DSC204 from NETZSCH Japan K.K.), and the raised temperature is maintained for 10 minutes. Further, the temperature is cooled to 20°C at the temperature dropping speed of 10°C/minute, the temperature is maintained for 10 minutes, and then the temperature is raised again to 300°C at the temperature increasing speed of 10°C/minute (2nd temperature raise). The intersection point of the tangent line at the melting point observed in the second temperature rise and the baseline of the DSC curve at the temperature in lower side than the melting point may be the melting point of the thermally weldable film.

The thermally weldable film may include an additional material such as an anti-blocking agent, a lubricant, a flame retardant, and a filler material.

The thickness of the thermally weldable film is preferably, for example, in a range of 20 µm to 100 µm, more preferably in a range of 25 µm to 90 µm, and particularly preferably in a range of 30 µm to 80 µm. When the thickness of the thermally weldable film is more than the above range, the gas barrier performance of the outer packing material may be reduced, and when the thickness is thinner than the above range, the desired adhesive strength may not be obtained.

### 2-3. Protective film

The outer packing material of the present embodiment preferably includes a protective film in addition to the thermally weldable film and gas barrier film. Although the disposed position of the protective film in the outer packing material is not particularly limited, the protective film is preferably disposed at the position that is the outermost layer (the most surface layer), when a vacuum insulation material is formed, such as at the surface of the gas barrier film that is opposite to the thermally weldable film.

The protective film has only to be formed from resins with higher melting point than the thermally weldable film, and it may be in a sheet form, and may be in a film form. Specifically, since the protective film described in Japanese Patent Application Laid-Open (JP-A) No. 2017-180822 can be employed as such protective film, explanation herein is omitted.

### 2-4. In relation to layer structure

The outer packing material for vacuum insulation material in the present disclosure includes at least one gas barrier film including the specified PET substrate and inorganic layer described above. The order of the PET substrate and the inorganic layer is not particularly limited, and can be appropriately set according to the layer structure of each layer other than the gas barrier film, or the number of the gas barrier films used along with the outer packing material. For example, as shown in FIG. 1, when a vacuum insulation material is formed using an outer packing material 10 provided with a gas barrier film 3 including the specific PET substrate 1 and the inorganic layer 2 described above, the inorganic layer 2 may be disposed so that it is on the inner side of the PET substrate 1. In other words, the outer packing material 10 in the present disclosure includes a thermally weldable film 4 and the gas barrier film 3, and the gas barrier film 3 may include an inorganic layer 2 and a PET substrate 1 in this order from the thermally weldable film 4 side.

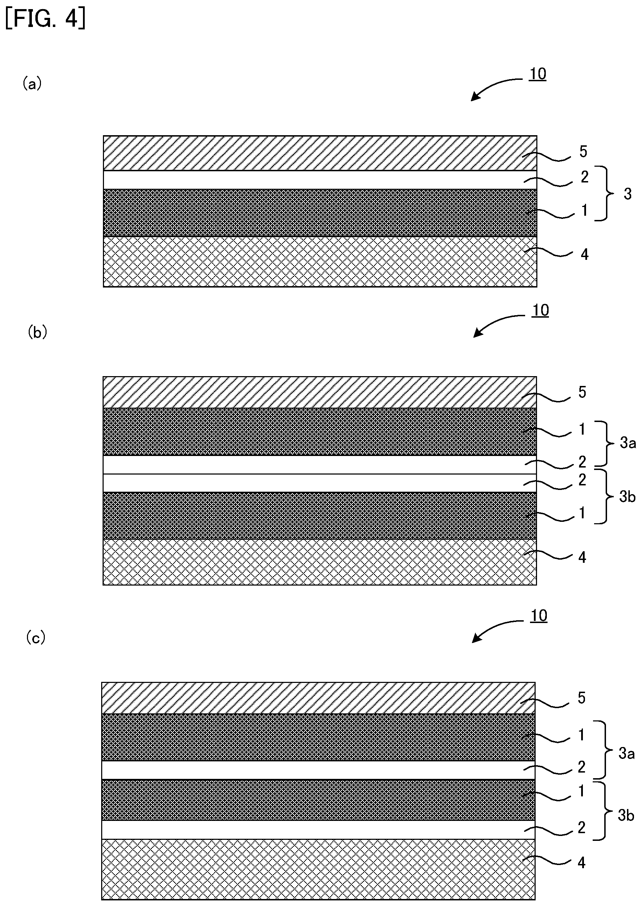

Also, as shown in FIG. 4(a), when the outer packing material 10 includes a protective film 5, the gas barrier film 3 may be disposed so that the inorganic layer 2 is on the outer side of the PET substrate 1. In other words, the outer packing material 10 in the present disclosure includes a thermally weldable film 4, the gas barrier film 3 disposed on one surface of the thermally weldable film 4, and the protective film 5 disposed on the surface of the gas barrier film 3 that is opposite to the thermally weldable film **1,** and the gas barrier film 3 may include a PET substrate 1 and an inorganic layer 2 in this order from the thermally weldable film 4 side.

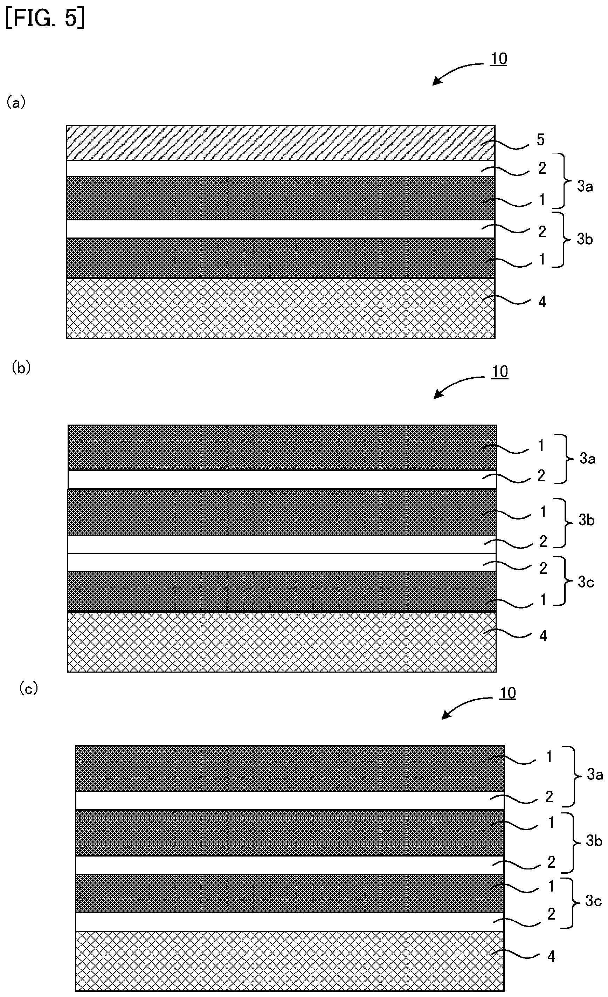

When the outer packing material 10 includes two gas barrier films, adjacent two gas barrier films 3a, 3b may be disposed so that respective inorganic layers 2 facing each other, as shown in FIG. 4(b); adjacent two gas barrier films 3a, 3b may be disposed so that both of the inorganic layers 2 are on the inner side of the PET substrate **1,** as shown in FIG. 4 (c) ; and adjacent two gas barrier films 3a, 3b may be disposed so that both of the inorganic layers 2 are on the outer side of the PET substrate 1, as shown in FIG. 5(a).

In the outer packing material in the present disclosure, as shown in FIG. 5(b) and FIG. 5(c), when the gas barrier film 3 is disposed on the outermost layer of the vacuum insulation material, the outermost gas barrier film 3a is preferably disposed so that the inorganic layer 2 is on the inner side of the PET substrate 1, in view of protecting the inorganic layer 2.

Also, the outer packing material in the present disclosure may include another film having gas barrier properties, in addition to the gas barrier film including the specified PET substrate described above. For example, in FIG. 4(b), FIG. 4(c), and FIG. 5(a), one of the two gas barrier films 3 may be another film having gas barrier properties. Also, in FIG. 5(b), and FIG. 5(c), one or two of the three gas barrier films 3 may be another film having gas barrier properties.

The thickness of the outer packing material is not particularly limited as long as the desired gas barrier performance and strength can be obtained, and is preferably, for example, in a range of 30 µm to 200 µm, and more preferably in a range of 50 µm to 150 µm.

As for the method of stacking the outer packing material is not particularly limited as long as an outer packing material with the desired structure can be obtained, and kwon methods can be used. Examples the method may include a dry lamination method wherein each previously formed layer is adhered using the interlayer adhesive layer described above; and a method wherein each material of the heat-melted gas barrier film is extruded and adhered using, for example, a T-die, and the thermally weldable film is adhered to the resulting stacked body via an interlayer adhesive layer.

### 3. Properties of outer packing material for vacuum insulation material

The outer packaging material for vacuum insulation material in the present disclosure has excellent gas barrier performance. Specifically, the water vapor permeability of the outer packing material for vacuum insulation material, under atmosphere at temperature of 40°C and humidity of 90%RH, is preferably 0.01 g/(m²·day) or less. Also, the oxygen permeability of the outer packing material for vacuum insulation material, under atmosphere at temperature of 100°C and humidity of 0%RH, is preferably 0.05 cc/(m²·day·atm) or less. Further, the deterioration of the water vapor permeability of the outer packaging material for vacuum insulation material, after stored for 500 hours under atmosphere at temperature of 145°C, is preferably 0.01 g/(m²·day) or less. The reason therefor is to obtain an outer packing material capable of maintaining high gas barrier performance even at high temperature. Therefore, an outer packing material capable of forming a vacuum insulation material that is able to maintain a thermal insulating property for a long term even at high temperature, may be provided.

The water vapor permeability of the outer packing material can be measured accordance to ISO 15106-5:2015 (differential pressure method), under an atmosphere of measurement temperature of 40°C and humidity of 90%RH using a water vapor permeability measurement device (DELTAPERM" from U.K. Technolox Ltd.). The measurement is carried out by installing the outer packing material between an upper room and a lower room of the device so as the surface positioned on the gas barrier film side with respect to the thermally weldable film in the thickness direction of the outer packing material, among the surfaces of the outer packing material, comes to high humidity side (water vapor supplying side), and the measurement is carried out under condition of permeation area of 64 cm². In one condition, at least 3 pieces of the sample are measured, and the average of these measured values is regarded as the value of the water vapor permeability in that condition. Hereinafter, the water vapor permeability described in the present specification can be measured using a method similar to the method described above.

The oxygen permeability of the outer packing material can be measured using an oxygen gas permeability measurement device (OXTARAN from U.S. MOCON) with reference to JIS K 7126-2A:2006 (Plastic-film and sheet-gas permeability test method-Section 2: Isopiestic method, Annex A: Test method of oxygen gas permeability with electrolytic sensor method) under the conditions of measurement temperature of 100°C and humidity of 0%RH. The measurement is carried out by installing the outer packing material in the device so as the surface positioned on the gas barrier film side with respect to the thermally weldable film in the thickness direction of the outer packing material, among the surfaces of the outer packing material, is in contact with oxygen gas, and the measurement is carried out under condition of permeation area of 50 cm². The measurement is carried out as follows. Firstly, carrier gas is supplied to the device at a flow rate of 10 cc/min for 60 minutes or more to purge. As the carrier gas, nitrogen gas including approximately 5% of hydrogen may be used. After purging, the test gas is flowed into the device, and the measurement is carried out after securing 12 hours of time from the initiation of the flow until reaching to the equilibrium state. As the test gas, the dry oxygen of at least 99.5% is used. In one condition, at least 3 pieces of the sample are measured, and the average of these measured values is regarded as the value of the oxygen permeability under that condition.

### 4. Others

The outer packing material for vacuum insulation material in the present disclosure may or may not have transparency, and may be appropriately set according to the use application of vacuum insulation material in which the outer packing material for vacuum insulation material in the present disclosure is used. The transparency of the outer packing material for vacuum insulation material is not specified by a strict transmittance, and can be appropriately determined according to, for example, the used application.

When the outer packing material for vacuum insulation material in the present disclosure has transparency, inside of the vacuum insulation material using the outer packing material for vacuum insulation material is visible. Therefore, by placing a detection agent together with the core material inside the vacuum insulation material, the vacuum state inside can be confirmed visually by the changes of the detection agent.

Examples of the method for producing an outer packing material for vacuum insulation material in the present disclosure may include a method wherein each of the previously produced films are adhered via the adhesive layer described above. Also, the outer packing material for vacuum insulation material in the present disclosure may be produced by extruding and stacking the heat-melted raw materials of each film sequentially by, for example, a T-die.

The outer packing material for vacuum insulation material in the present disclosure can be used for a vacuum insulation material. In the vacuum insulation material, the outer packing material for vacuum insulationmaterial in the present disclosure can be used by disposing so that the thermally weldable film is on the core material side, facing via the core material.

### B. Vacuum insulation material

The vacuum insulation material in the present disclosure is a vacuum insulation material comprising a core material, and an outer packing material enclosing the core material; wherein the outer packing material is the one described in the section "A. Outer packing material for vacuum insulationmaterial" above.

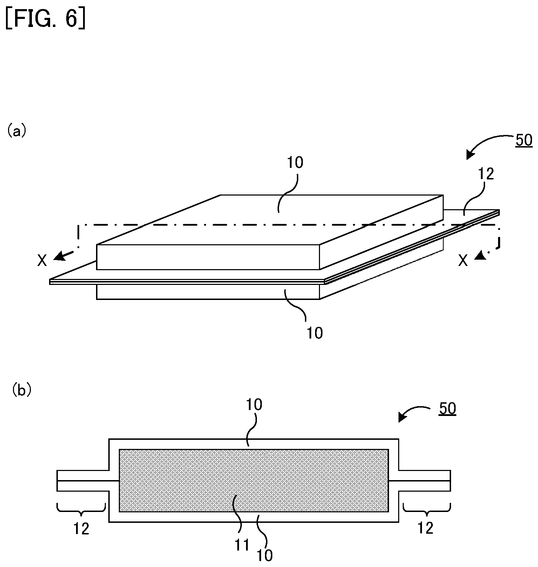

FIG. 6(a) is a schematic perspective view exemplifying the vacuum insulation material in the present disclosure, and FIG. 6 (b) is an X-X cross-sectional view of FIG. 6(a). The vacuum insulation material 50 shown in FIGS. 6 includes a core material 11, and an outer packing material 10 enclosing the core material 11, and the outer packing material 10 is the outer packing material for vacuum insulation material described in FIG. 1. The vacuum insulation material 50 is formed by two pieces of the outer packing material 10 in the manner that the two pieces of the outer packing material 10 are brought into a form wherein each of the thermally weldable films face each other, edges 12 are thermally welded to prepare a bag body wherein the core material 11 is enclosed inside the bag body, and the pressure inside the bag body is decompressed.

According to the present disclosure, since the outer packing material enclosing the core material is the outer packing material for vacuum insulation material explained in the section "A. Outer packingmaterial for vacuum insulationmaterial" above, the vacuum insulation material is able to maintain good thermal insulation property even at high temperature. Hereinafter, each constitution of the vacuum insulation material in the present disclosure is explained.

### 1. Outer packing material for vacuum insulation material

The outer packing material for vacuum insulation material in the present disclosure is a member that configured to enclose a core material, and is the same as the outer packing material for vacuum insulation material explained in the section "A. Outer packing material for vacuum insulation material" above; thus, the explanations herein are omitted.

### 2. Core material

The core material in the present disclosure is a member that is enclosed in the outer covering material for vacuum insulation material. Incidentally, enclosing means sealing inside the bag body formed using an outer packing material for vacuum insulation material.

The core material preferably has low heat conductivity. Also, the core material may be a porous material whose void ratio is 50% or more, particularly 90% or more.

As the material constituting the core material, a material such as a powder body, a foam body, and a fiber body may be used. The powder body may be inorganic based and may be organic based; for example, a material such as dry silica, wet silica, condensed silica powder, a conductive powder body, a calcium carbonate powder, perlite, cray, and talc may be used. Above all, the mixture of dry silica and a conductive powder body is advantageous on the occasion of using thereof in the temperature range where inner pressure rise is caused, since the degrade of the heat insulation performance along with the inner pressure rise of the vacuum insulation material is small. Further, addition of a material having small infrared ray absorption rate such as a titanium oxide, an aluminum oxide, and indium-doped tin oxide, to the above described material, as a radiation inhibitor may reduce the infrared ray absorption rate of the core material.

As the foam body, a material such as urethane foam, styrene foam, and phenol foam maybe used. Above all, a foam body forming continuous foam is preferable.

The fiber body may be inorganic fiber and may be organic fiber, but inorganic fiber is preferably used from the viewpoint of heat insulation performance. Examples of the inorganic fiber may include glass fiber such as glass wool and glass fiber, alumina fiber, silica alumina fiber, silica fiber, ceramic fiber, and rock wool. These inorganic fibers are preferable on the point that they have low heat conductivity and are more easily handled compared to powder bodies.

As the core material, the above described material may be used singly, and two types or more of the materials may be mixed to form a composite material.

### 3. Others

The vacuum insulation material in the present disclosure is in a vacuum state in which the core material is enclosed inside the outer packing material for vacuum insulation material and the pressure inside is decompressed. The vacuum degree inside the vacuum insulation material is preferably, for example, 5 Pa or less. The reason therefor is to lower the heat conduction due to the convection of air remained inside so as to exhibit excellent heat insulation performance.

The lower the heat conductivity of the vacuum insulation material is, the more preferable; for example, the heat conductivity (initial heat conductivity) is preferably 5mW/(mK) or less. The reason therefor is not to easily conduct heat by the vacuum insulation material to outside so as to exhibit high heat insulation effect. Above all, the initial heat conductivity is more preferably 4 mW/ (mK) or less. The heat conductivity can be measured in accordance with JISA1412-2:1999, under the conditions of high temperature side of 30°C, low temperature side of 10°C, and an average temperature of 20°C.

Also, since the vacuum insulation material in the present disclosure uses the outer packing material for vacuum insulation material described above, the deterioration of heat insulation performance is suppressed.

As the method for producing the vacuum insulation material in the present disclosure, a general method may be used. For example, two pieces of the outer packing material for vacuum insulation material explained in the section **"A.** Outer packing material for vacuum insulation material" above are prepared and overlapped so that each thermally weldable film faces each other, and three sides of the outer periphery are thermally welded to obtain a bag body of which one side opens. After inserting a core material into the bag body from the opening, the air is sucked from the opening and the opening is sealed when inside the bag body is in a decompressed state; thereby, a vacuum insulation material may be obtained.

The vacuum insulation material in the present disclosure may be used in, for example, an article that requires thermal insulation. The article is described later.

### C. Article provided with vacuum insulation material

The article provided with vacuum insulation material in the present disclosure is an article provided with vacuum insulation material comprising: an article including a thermal insulation region, and a vacuum insulation material, wherein the vacuum insulation material includes a core material, and an outer packing material enclosing the core material; and the outer packing material is the outer packing material for vacuum insulation material explained in the section "A. Outer packing material for vacuum insulation material" above.

According to the present disclosure, since the vacuum insulation material used in the article is constituted by the outer packing material explained in the section "A. Outer packing material for vacuum insulation material", the vacuum insulation material is able to exhibit excellent heat insulationperformance for a long term. Since the article includes such vacuum insulation material, it is possible to achieve energy saving of articles causing a high temperature environment or a high temperature and high humidity environment, or objects in which the articles are used.

The vacuum insulation material in the present disclosure and the outer packing material for vacuum insulation material used therefor are explained in details in the sections "B. Vacuum insulation material" and "A. Outer packing material for vacuum insulation material" above; thus, the explanations herein are omitted.

The article in the present disclosure includes a thermal insulation region. Here, the thermal insulation region is a region thermally insulated by the vacuum insulation material, which is, for example, a region warmed or cooled; a region surrounding a heating source or a cooling source; or a region isolated from the heating source or the cooling source. These regions may be a space, and may be a substance.

Examples of the article may include electronic devices such as a refrigerator, a freezer, a heat-keeping device, and a cool-keeping device; containers such as a heat-keeping container, a cool-keeping container, a container for transportation, acontainer, and a storing container, conveyance for transporting such as a vehicle, an airplane, and a vessel; buildings such as a house and a storehouse; and construction materials such as a wall material and a floor material.

The present disclosure is not limited to the above embodiment. The foregoing embodiments are merely exemplifications and any other variations having substantially the same constitutions as the technical idea described in the claims of the present disclosure and the same operations and effects thereto are intended to be included within the scope of the present disclosure.

### Examples

The present disclosure is hereinafter explained in further details with reference to Examples and Comparative Examples.

PET substrates having the lamellar period shown in Table 1 were prepared. The lamellar periods of the PET substrates are the values determined by the method described above. The dimensional change ratios of the PET substrate before and after the PET substrates were maintained at high temperature, and the dimensional change ratios of the PET substrates during each of the temperature increasing process, constant temperature process, and temperature decreasing process were determined. The dimensional change ratios are the values obtained by the method described above. The results are shown in Table 1.

**[Table 1]**

| | Lamellar period [nm] : SAXS | Dimensional change ratio : TMA | | | |
|---|---|---|---|---|---|
| | | (MDTD average) [%] | | | |
| | | Before and after maintaining at high temp. | Temp. increasing process | constant temp. process | Temp. decreasing process |
| Comp. Ex. 1 | 16.1 | 0.15 | 0.38 | 0.04 | 0.53 |
| Example 1 | 15.7 | 0.33 | 0.13 | 0.06 | 0.46 |
| Example 2 | 14.0 | 0.57 | 0.25 | 0.12 | 0.32 |
| Example 3 | 14.0 | 0.45 | 0.08 | 0.17 | 0.37 |
| Comp. Ex. 2 | 12.3 | 1.48 | 1.12 | 0.32 | 0.37 |
| Comp. Ex. 3 | 10.3 | 3.86 | 3.65 | 1.05 | 0.21 |
| Comp. Ex. 4 | 10.1 | 5.07 | 4.85 | 1.22 | 0.22 |

From the results in Table 1, it was confirmed that dimensional change ratio before and after being maintained at high temperature, and the dimensional change ratio during each of the temperature increasing process, constant temperature process, and temperature decreasing process of PET substrates in Example 1 to Example 3, wherein the lamellar periods were 13.0 nm or more and 16.0 nm or less, were small. Therefore, it is considered that, by using the resin substrate for the gas barrier film, high gas barrier performance can be maintained even at high temperature so that is able to obtain an outer packing material for vacuum insulation material capable of forming a vacuum insulation material that is able to maintain thermal insulating property for a long term. Meanwhile, it was confirmed that, since the lamellar period was small in Comparative Examples 2 to 4, the distortion in the production process remained, and therefore shrunk in the temperature increasing process, resulting in a large dimensional change ratio, and further, the distortion was not dissolved and remained also in the temperature decreasing process, and the dimensional change ratio before and after being maintained at high temperature was large. Meanwhile, since the lamellar period was large in Comparative Example 1, it was confirmed that the dimensional change ratio was large particularly in the temperature decreasing process.

As described above, in the present disclosure, for example, the following inventions are provided.

[1] An outer packing material for vacuum insulation material comprising a film including a substrate including polyethylene terephthalate, and an inorganic layer including inorganic material that is disposed on at least one surface of the substrate, wherein
   a lamellar period of the substrate is 13.0 nm or more and 16.0 nm or less.
[2] The outer packing material for vacuum insulation material according to [1], wherein the inorganic material constituting the inorganic layer is aluminum, aluminum oxide, or silicon oxide.
[3] A vacuum insulation material comprising a core material, and an outer packing material enclosing the core material; wherein
   the outer packing material is the outer packing material for vacuum insulation material according to [1] or [2].
[4] An article provided with vacuum insulation material comprising an article including a thermal insulation region, and a vacuum insulation material, wherein
   the vacuum insulation material includes a core material, and an outer packing material enclosing the core material; and
   the outer packing material is the outer packing material for vacuum insulation material according to [1] or [2].

### Reference Signs List

1: PET substrate
2: inorganic layer
3: gas barrier film
4: thermally weldable film
5: protective film
10: outer packing material for vacuum insulation material
11: core material
50 vacuum insulation material

## Claims

1. An outer packing material for vacuum insulation material comprising a film including a substrate including polyethylene terephthalate, and an inorganic layer including inorganic material that is disposed on at least one surface of the substrate, wherein
a lamellar period of the substrate is 13.0 nm or more and 16.0 nm or less.

2. The outer packing material for vacuum insulation material according to claim **1,** wherein the inorganic material constituting the inorganic layer is aluminum, aluminum oxide, or silicon oxide.

3. A vacuum insulation material comprising a core material, and an outer packing material enclosing the core material; wherein
the outer packing material is the outer packing material for vacuum insulation material according to claim 1 or 2.

4. An article provided with vacuum insulation material comprising an article including a thermal insulation region, and a vacuum insulation material, wherein
the vacuum insulation material includes a core material, and an outer packing material enclosing the core material; and
the outer packing material is the outer packing material for vacuum insulation material according to claim 1 or 2.
